# EUROPÄISCHE PATENTSCHRIFT

(11) **EP 3 408 225 B1**
(45) Veröffentlichungstag und Bekanntmachung des Hinweises auf die Patenterteilung: **06.03.2024**
(21) Anmeldenummer: 17704407.0
(22) Anmeldetag: 27.01.2017
(51) Int. Cl.: C01B 32/20, H01M 4/583, C01B 32/205, C01B 32/21, H01M 4/587

(54) **KATALYTISCH WIRKSAME ADDITIVE FÜR PETROLSTAEMMIGE ODER KOHLESTAEMMIGE KOKSE**
CATALYTICALLY ACTIVE ADDITIVES FOR COKE ORIGINTIANG FROM PETROL OR COAL
ADDITIFS À EFFET CATALYTIQUE POUR COKE DE PÉTROLE OU COKE DE CHARBON

(30) Priorität: 29.01.2016 DE 102016201430
(43) Veröffentlichungstag der Anmeldung: 05.12.2018
(73) Patentinhaber: SGL Carbon SE, 65201 Wiesbaden (DE)
(72) Erfinder: WALTER, Heribert, 86405 Meitingen (DE); FROHS, Wilhelm, 86695 Allmannshofen (DE); DAIMER, Johann, 64546 Mörfelden-Walldorf (DE); CHRIST, Martin, 86405 Meitingen (DE); ÖTTINGER, Oswin, 86405 Meitingen (DE); KETTERER, Bernt, 86405 Meitingen (DE); GALBIATI, Ivano, 86405 Meitingen (DE)
(86) Internationale Anmeldenummer: PCT/EP2017/051818
(87) Internationale Veröffentlichungsnummer: WO 2017/129774

(56) Entgegenhaltungen:
- US-A- 4 334 980
- US-A1- 2010 209 331
- US-A1- 2011 044 881
- US-A1- 2014 349 173

## Beschreibung

Die Erfindung betrifft ein Verfahren zur Herstellung von Graphitmaterialien, sowie deren Verwendung für Lithium-Ionenbatterien.

Zur Herstellung von Graphitmaterialien können petrolstämmige oder kohlestämmige Kokse eingesetzt werden, die beispielsweise unter Zuhilfenahme eines Delayed Cokers hergestellt werden. Hierbei werden Petrolrückstände, Steinkohlenteerpeche oder Rückstände der Kohlevergasung, Kohlehydrierung oder auch der Fischer Tropsch Synthese zu Koksen verarbeitet. Bei dem Delayed Coker handelt es sich um ein Konversionsverfahren der Erdöl-Raffinerie, in dem hochmolekulare, viskose Rückstände verkokt werden (Delayed-Coking-Verfahren). Sehr schwere Öle, die bei der Erdölverarbeitung als Rückstand anfallen, Vakuumrückstand (Slurryoil, Decantoil, Thermal Tar oder Ethylene Tar), Steinkohlenteerpech, Rückstände der Kohlevergasung, Kohlehydrierung und/oder Rückstände der Fischer-Tropsch-Synthese (Waxöle) sind bei Raumtemperatur flüssig oder pastös, bzw. haben sehr niedrige Erweichungstemperaturen, so dass eine Umsetzung der Zugabe von Additiven für einen Fachmann keine Hürde darstellt.

Der Delayed Coker besteht im Wesentlichen aus zwei Aggregaten, einem Durchlauferhitzer (Coker Furnace) und zwei abwechselnd beaufschlagten Kokstrommeln (Coker Drums). In einem Durchlauferhitzer werden die Rückstände auf ca. 450-550°C aufgeheizt.

Die so erhaltenen Kokse können kalziniert werden und können durch weitere thermische Behandlung oberhalb von 2200°C in synthetischen Graphit überführt werden.

Eine klassische Verfahrenstechnik ist die Acheson-Graphitierung (US702,758). Der Ofen besteht aus einem horizontalen Bett aus feuerfesten Materialien, Ofenköpfen, welche die Stromlast zum Ofen tragen, und langen Seitenwänden, die aus Betonblöcken, Stahlplatten oder Stahlgittern hergestellt sind. Der Boden wird mit Luft gekühlt und mit einer Schicht aus Isoliermaterialien, z.B. gekörntem Siliziumcarbid, Hüttenkoks, Sand oder Sägemehl beladen. Dieselben Materialien werden verwendet, um die Seitenwände und die Oberfläche des Ofens zu isolieren. Ruß wird als ein Isoliermaterial verwendet, insbesondere wenn ein niedrigerer Aschegehalt des Graphitprodukts erwünscht ist. Das zu graphitierende Material wird zwischen die Ofenköpfe geschichtet, gewöhnlich horizontal und quer zum Fluss des elektrischen Stroms. Acheson-Öfen sind feste Konstruktionen, die für die Graphitierung aller möglichen Formen gut geeignet sind. Weniger zufriedenstellend ist der hohe Anteil an Totmaterial, die langen Heiz- und Abkühlzeiten, welche zu einer Produktionszeit von etwa 2 bis 6 Wochen für einen Graphitierungslauf führen, dem entsprechenden hohen Energiebedarf und der Inhomogenität des Produkts.

Eine weitere Anlage zum Graphitieren in horizontaler Lage mit direktem Stromdurchgang durch das zu graphitierende Material ist der Castner-Ofen, der in industriellen Anlagen heute weit verbreitet ist (DE10244351A), da dieser durch den direkten Energieeintrag in der Regel weniger Energie verbraucht und deutlich kürzere Prozesslaufzeiten von wenigen Tagen ermöglicht.

Eine weitere Verfahrenstechnik ist die Wirbelschichtgraphitierung (EP0274165B1), die beispielsweise zur Reinigung von Koks, für die weitere Verwendung als Rohstoff eingesetzt wird. Bei diesem Verfahren nach Desulco^{®} wird eine Körnung durch eine Wirbelschicht getragen. Die Schüttrichtung erfolgt gravimetrisch von oben nach unten, wobei ein Stickstoffstrom entgegen der Schüttrichtung geführt wird. Ein Wirbelbett wird an einer Engstelle des Reaktors aufgebaut. Nach Art des Aufbaus kann die Verweilzeit des Kokses nur wenige Sekunden betragen.

Lokal entstehen hohe Temperaturen durch Mikro-Lichtbögen zwischen den einzelnen Partikeln, Körnern oder Granulaten. Die Temperatur ist nicht messbar. Ein hoher Austrag an Feinmaterial und brennbaren Gasen in einer flüchtigen Nachverbrennung verhindert die Emission von Spaltprodukten. Erhebliche Nachteile dieses Verfahrens sind die beschriebene sehr kurze Einwirkzeit und ein vergleichsweise niedriger Graphitierungsgrad, der für die Herstellung von beispielsweise Anodenmaterialien für Lithiumionenbatterien wenig geeignet ist.

Die Fischer-Tropsch-Synthese ist ein großtechnisches Verfahren zur Kohleverflüssigung. Dies geschieht durch heterogenkatalytische Umwandlung von Synthesegas, einem Kohlenmonoxid-Wasserstoff-Gemisch, in ein breites Spektrum gasförmiger und flüssiger Kohlenwasserstoffe. Das Bergius-Verfahren ist ein weiteres großtechnisches Verfahren, bei dem durch Hydrierung von Kohle mit Wasserstoff in einer exothermen Reaktion Kohlenwasserstoffe erzeugt werden.

Diese Graphitmaterialien können mit Lithium als Lithium-Interkalationsmaterialien in Anodenmaterialien für Lithiumionenbatterien eingesetzt werden. Dadurch können sichere Zellen mit guter Zyklisierungseffizienz hergestellt werden.

Die Zyklisierungseffizienz beschreibt die Coulombeffizienz über die eine Anzahl an Zyklen aus Laden und Entladen. Die Coulombeffizienz ist das Verhältnis zwischen der Ladungsmenge, die die Lithiumionenbatterie während des Entladens verlässt und während des Ladevorgangs diese eintritt.

US2011/044881 beschreibt ein Verfahren zur Herstellung von Koks mit einem ausgewählten Wärmeausdehnungskoeffizienten aus Lösungsmittelextrakten von Kohle, der als Ausgangsmaterial für ein Graphitprodukt mit einem gewünschten Wärmeausdehnungskoeffizienten verwendet wird.

In der Patentanmeldung US2014/0349173A1 werden für die Acheson-Graphitierung Katalysatoren wie Eisen, Nickel, Titan, Silizium und Bor, sowie deren Carbide und Oxide eingesetzt (Seite 4, Absatz [0062]). Durch diese Katalysatoren wird ein besserer Graphitierungsgrad erreicht.

Nachteile dieses Verfahrens sind jedoch erhebliche Katalysatormengen (zwischen 3 und 30 Gew.-%), sowie eine inhomogene Verteilung des Katalysators. Gerade bei größeren Koks-Teilchengrößen liegen die in der Binderphase eingemischten Katalysatoren an der Oberfläche der Koksteilchen vor und sind damit nicht homogen verteilt.

Aufgabe der Erfindung ist es einen homogenen verteilten Katalysators in den einzelnen Kokskörnern bereitzustellen.

Gelöst wird diese Aufgabe durch ein Verfahren zur Herstellung von Graphitmaterialien, wobei die folgenden Schritte umfasst sind:
a) Zugeben mindestens eines für eine katalytische Graphitierung wirksamen Katalysators, ausgewählt aus mindestens einer Verbindung der Oxide und Carbide aus der Gruppe mit den Elementen Eisen, Nickel, Titan, Silizium und Bor zu Petrolrückständen, Steinkohlenteerpech und/oder Rückständen der Kohlevergasung, Fischer-Tropsch-Synthese oder Kohlehydrierung in einem Delayed Coker;
b) Herstellen eines dotierten, grünen Kokses im Delayed Coker, wobei unter dem Begriff dotiert verstandem wird, dass der Koks homogen verteilten Katalysator enthält,
c) Kalzinieren der aus Schritt b) erhaltenen dotierten, grünen Kokses bei 1100-1400°C zu einem dotierten, kalzinierten Koks
d) Mechanisches Zerkleinern des dotierten, kalzinierten Kokses;
e) Formen eines Grünkörpers aus dem dotierten, kalzinierten Koks aus Schritt d) zusammen mit einem Binderzusatz und anschließender Karbonisierung bei 600 - 1400°C des Grünkörpers;
f) Graphitieren des karboniserten Grünkörpers aus Schritt d) bei Temperaturen von größer 2600°C, bevorzugt größer 2800°C und besonders bevorzugt größer 3000°C in der Acheson oder Castner Graphitierung oder durch eine kontinuierliche oder Batch-Pulvergraphitierung des Pulvers aus Schritt d);
g) Mahlen des Körpers aus Schritt f).

Unter einem grünen Koks wird im Rahmen der Erfindung ein Koks verstanden, der in einem Delayed Coker hergestellt und ausgebracht worden ist. Unter dem Begriff dotiert wird verstanden, dass der Koks homogen verteilten Katalysator enthält. Kalzinieren ist eine Temperaturbehandlung bei 1100 bis 1400 °C des grünen, dotierten Kokses um diesen von restlichen flüchtigen Kohlenwasserstoffen zu befreien. Durch dieses Verfahren kann der Katalysatorgehalt um mindestens 50% reduziert werden, wobei unter dem Katalysatorgehalt im Rahmen dieser Erfindung der Anteil des Katalysators in Bezug auf die Edukte verstanden wird.

Durch das erfindungsgemäße Verfahren wird eine homogene Verteilung des Katalysators erreicht, da der Katalysator den flüssigen Ausgangsstoffen/ Edukten des Delayed Cokers zugegeben wird. Zudem kann die Katalysatormenge auf maximal 15 Gew.-% bezogen auf die Edukte reduziert werden, wodurch eine verbesserte Wirkung des Katalysators hervorgerufen wird. Durch die Verwendung des mit einem Katalysator dotierten grünen Kokses bei der Herstellung von Graphitprodukten wird durch die homogene Verteilung des Katalysators im Koks nur eine geringere Menge an Binder, bevorzugt 2- 10 Gew.-%, als bei einer heterogenen Verteilung benötigt. Durch die geringe Menge an Binder müssen auch weniger flüchtige Bestandteile ausgetrieben werden, so dass leichter ein Produkt mit größerer Reinheit entsteht. Das Austreiben der flüchtigen Bestandteile des Binders und Katalysators geschieht im Prozessschritt der Hochtemperaturbehandlung der Graphitierung.

Darüber hinaus können durch dieses Verfahren sogenannte Grobrezepturen verwendet werden. Unter Grobrezepturen wird verstanden, dass die Zusammensetzung des Koks aus gröberen Bestandteilen von d₅₀-Werte von 100 µm bis 20 mm besteht. Dies hat den Vorteil, dass die aus den Grobrezepturen hergestellten Grünkörper einfacher und schneller karbonisiert und graphitiert werden können, denn Grobrezepturen benötigen einen deutlich geringeren Binderanteil.

Desweiteren können Konti-Pulvergraphitierungsmethoden mit dem Einsatz erfindungsgemäß dotierter Kokse Graphit mit hohem Graphitierungsgrad liefern.

Der Graphitierungsgrad ist eine Kennzahl, die den Netzebenenabstand beschreibt. Bei einem idealen Graphit beträgt der Netzebenenabstand d₀₀₂ 0,3354 nm, wobei dies einem Graphitierungsgrad von 1 entspricht. Der Graphitierungsgrad 0 entspricht definitionsgemäß dabei einem Netzebenenabstand von 0,344 nm (nach Maire und Mehring).

Aus der Literatur ist bekannt (siehe z. B. C.L. Fan. et al, Electrochimica Acta 75(2012) 311-315), dass die Entladekapazität von Graphit in Lithium-Ionen-Batterien nahezu linear mit dem Graphitierungsgrad zunimmt. Die maximal theoretische Entladekapazität von idealem Graphit ist dabei 372 mAh/g.

Vorteilhafterweise ist der Katalysator aus Schritt a) mindestens eine Verbindung ausgewählt aus der Gruppe SiC, SiO₂, Fe₂O₃ oder TiO₂.

Vorteilhafterweise umfasst der dotierte, kalzinierte Koks aus Schritt c) maximal 15 Gew.%, bevorzugt 1-10 Gew.%, besonders bevorzugt 1-5 Gew.% Katalysator. Bei mehr als 15 Gew.-% Katalysator treten keine weiteren positiven Effekte auf und bei weniger als 1 Gew-.% ist die eingesetzte Menge an Katalysator nicht ausreichend für eine katalytische Graphitierung.

Vorteilhafterweise weist der dotierte, kalzinierte Koks bei der Herstellung des Grünkörpers in Schritt e) eine maximale Korngröße von größer 100 µm, bevorzugt 1 bis 20 mm auf. Bei kleiner als 100 µm und größer als 20 mm wird die Verarbeitung bei der Herstellung des Grünkörpers erschwert. Die Korngrößen des dotierten, kalzinierten Kokses werden mit der Siebanalyse (DIN I 66165-2016; Verfahren F) bestimmt.

Vorteilhafterweise ist die Graphitierung im Schritt f) im Falle einer Formkörpergraphitierung das Castnerverfahren und im Falle der Pulvergraphitierung die kontinuierliche Pulvergraphitierung.

In einer weiteren vorteilhaften Ausführungsform wird das Pulver aus dem Schritt d) vor der Formgebung zusätzlich mit Naturgraphit kleiner 50 Gew.-%, bevorzugt. 10 bis 30 Gew.-% gemischt wird. Der Vorteil der Verwendung von Naturgraphit liegt in der Dichteerhöhung des Grünkörpers. Bei Verwendung von mehr als 50 Gew.-% wird die Herstellung des Grünkörpers erschwert und bei weniger als 10 Gew-.% Naturgraphit treten keine positiven Effekte des Naturgraphits auf.

Vorteilhafterweise wird in Schritt e) der Binder für das Formen des Grünkörpers ausgewählt aus der Gruppe bestehend aus Steinkohlenteerpech, Bitumen, Phenolharz, Furanharz oder beliebigen Mischungen hiervon.

In einer weiteren vorteilhaften Ausführungsform wird dem verwendeten Binder in Schritt e) zusätzlich ein Katalysator beigemischt wird. Dies bietet den Vorteil, dass sowohl in den Kokskörnern als auch im Binder Katalysator vorliegt, so dass über die gesamte Mischung eine homogene Verteilung des Katalysators vorliegt.

Vorteilhafterweise wird der zusätzliche Katalysator ausgewählt aus mindestens einer Verbindung der Oxide und Carbide aus der Gruppe mit den Elementen Eisen, Nickel, Titan, Silizium und Bor und weist maximal 15 Gew.-% bezogen auf den Binderanteil auf. Bei einem Katalysatoranteil von größer als 15 Gew.-% bezogen auf den Binderanteil, treten keine weiteren Verbesserungen auf.

Die folgenden Mischungen in Bezug auf die Dotierung sind bevorzugt:
a) dotierter, kalzinierter Koks und Binder
b) dotierter, kalzinierter Koks, Binder mit zusätzlichem Katalysator
c) dotierter, kalzinierter, Koks, Naturgraphit und Binder
d) dotierter, kalzinierter Koks, Naturgraphit, Binder mit zusätzlichem Katalysator

Vorteilhafterweise wird die Graphitierung bei Temperaturen größer 2600°C, bevorzugt größer 2800°C und besonders bevorzugt größer 3000°C durchgeführt. Damit wird sichergestellt, dass der Katalysator ausgetrieben wird und ein hoher Graphitierungsgrad von 0,90 -1,0 des synthetischen Graphits erreicht wird.

Der Graphitierungsgrad wird im Rahmen der Erfindung nach Maire und Mering (J. Maire, J. Mering, Chemistry and Physics of Carbon, vol. 6, Marcel Dekker, 1970, Seite 125ff.) bestimmt.

Vorteilhafterweise weist das Graphitmaterial nach der Graphitierung eine spezifische Endladekapazität von 345 bis 365 mAh/g, bevorzugt 355 bis 365 mAh/g auf. Im Rahmen der Erfindung werden für die Messung der Entladekapazität (QE) der kohlenstoffbasierten Anodenmaterialien werden Testzellen im Knopfzellenformat 2016 assembliert und an einem galvanostatischen Batteriezyklisierer angeschlossen. Hierbei wird die Zelle zunächst mit konstantem Strom (CC = constant current) unter einer Stromrate (sog. C-Rate) von 0,1C (1C entspricht demjenigen Strom, welchen die Zelle benötigt um in 1 Stunde vollständig geladen zu werden) bis zu einer Abschaltspannung von 0 V geladen, wobei ein Abschaltstrom bei C/50 unter konstantem Potential (CV = constant voltage) erreicht werden muss. Anschließend wird die Zelle wiederum bei konstantem Strom bis zu einer Spannung von 1,5 V und einer Stromrate von 0,1C entladen. Hierbei wird die Entladekapazität QE durch Division der ermittelten Ladungsmenge in mAh und der spezifischen Anodenmasse ermittelt.

Das erfindungsgemäße Graphitmaterial wird als Anodenmaterial in Lithiumionenbatterien verwendet.

Nachfolgende Ausführungsbeispiele dienen zur weiteren Erläuterung der Erfindung, wobei diese Ausführungsbeispiele keine Einschränkung der Erfindung darstellen.

### Ausführungsbeispiel 1

Ein Steinkohlenteerpech mit Erweichungspunkt 60 °C wird auf 150 °C erhitzt und dabei in den flüssigen Zustand überführt. Zu dieser Schmelze wird SiC-Pulver mit einem d₅₀-Wert 50 µm zugegeben. Diese mit dem Katalysator versetzte Dispersion wird von oben kontinuierlich dem Delayed Coker zugeführt.

Verfahrenstechnisch ist es dabei am einfachsten, wenn die Basissubstanz (hier der Steinkohlenteerpech) der mit Katalysator versetzten Dispersion ein Teilstrom der Zuführung des Delayed Cokers ist.

Nach dem Delayed Cokerprozess wurde das Material gebrochen und bei 1300 ° C kalziniert.

Der mit SiC dotierte, kalzinierte Koks wurde einer Ascheanalyse unterworfen und hatte einen SiC-Gehalt von ca. 5 Gew.-%.

Der dotierte, kalzinierte Koks mit einer maximalen Körnung von 3 mm und mit 20 Gewichtsprozent Steinkohlenteerpech (Binder) mit einem Erweichungspunkt von 90 ° C vermischt und mittels Extrusion (Durchmesser 90 mm) in Form gebracht.

Das Stangenmaterial wurde anschließend karbonisiert und im Castnerofen bei 2800 °C graphitiert. Das Graphitmaterial wurde anschließend zu Anodenmaterialpulver mit einer d50-Korngröße von 20 µm weiterverarbeitet.

Der d50-Wert gibt die mittlere Teilchengröße an, wobei 50 % der Teilchen kleiner sind als der angegebene Wert. Bestimmt werden die in diesen Bereich fallenden Durchmesser mit der Laserlichtbeugung (ISO 13320-2009).

Das Pulver wurde einer Ascheanalyse unterworfen und der Si-Gehalt wurde zu kleiner 100 ppm bestimmt.

Die Röntgenanalyse des Pulvers ergab einen d₀₀₂-Wert von 0,3359 nm und einer scheinbaren Kristallitgröße mit einem Lc-Wert von 170 nm. Der Graphitierungsgrad ist mit 0,94 überraschend hoch.

Das Anodenpulver wurde anschließend einem Batteriezellentest in Halbzellenkonfiguration d. h. mit metallischem Lithium als Gegenelektrode getestet. Nach dem Formierungszyklus wurde die Entladekapazität bei einer Zyklierrate von C/10 mit 360 mAh/g ermittelt. Dies stellt ein sehr gutes Ergebnis nahe an der theoretischen Kapazität 372 mAh/g dar.

### Ausführungsbeispiel 2

Ein Steinkohlenteerpech mit Erweichungspunkt 60 °C wird auf 150 °C erhitzt und dabei in den flüssigen Zustand überführt. Zu dieser Schmelze wird SiC-Pulver mit einem d₅₀-Wert 50 µm zugegeben. Diese mit dem Katalysator versetzte Dispersion wird von oben kontinuierlich dem Delayed Coker zugeführt.

Verfahrenstechnisch ist es dabei am einfachsten, wenn die Basissubstanz (hier der Steinkohlenteerpech) der mit Katalysator versetzten Dispersion ein Teilstrom der Zuführung des Delayed Cokers ist.

Nach dem Delayed Cokerprozess wurde das Material gebrochen und bei 1300 ° C kalziniert.

Der mit SiC dotierte, kalzinierte Koks wurde einer Ascheanalyse unterworfen und hatte einen SiC-Gehalt von ca. 5 Gew.-%.

Der dotierte, kalzinierte Koks mit einer maximalen Körnung von 3 mm wurde mit 20 Gewichtsprozent Steinkohlenteerpech (Binder) mit einem Erweichungspunkt von 90 ° C vermischt, wobei dem Binder 5 Gewichtsprozent Katalysator (SiC) zugemischt wird, und mittels Extrusion (Durchmesser 90 mm) in Form gebracht.

Das Stangenmaterial wurde anschließend karbonisiert und im Castnerofen bei 2800 °C graphitiert. Das Graphitmaterial wurde anschließend zu Anodenmaterialpulver mit einer d50-Korngröße von 20 µm weiterverarbeitet. Der d50-Wert gibt die mittlere Teilchengröße an, wobei 50 % der Teilchen kleiner sind als der angegebene Wert. Bestimmt werden die in diesen Bereich fallenden Durchmesser mit der Laserlichtbeugung (ISO 13320-2009).

Das Pulver wurde einer Ascheanalyse unterworfen und der Si-Gehalt wurde zu kleiner 100 ppm bestimmt.

Die Röntgenanalyse des Pulvers ergab einen d₀₀₂-Wert von 0,3357 nm und einer scheinbaren Kristallitgröße mit einem Lc-Wert von 200 nm. Der Graphitierungsgrad ist mit 0,95 überraschend hoch.

Das Anodenpulver wurde anschließend einem Batteriezellentest in Halbzellenkonfiguration d. h. mit metallischem Lithium als Gegenelektrode getestet. Nach dem Formierungszyklus wurde die Entladekapazität bei einer Zyklierrate von C/10 mit 362 mAh/g ermittelt. Dies stellt ein sehr gutes Ergebnis nahe an der theoretischen Kapazität 372 mAh/g dar.

### Vergleichsbeispiel A (Stand der Technik)

In diesem Beispiel wurde Graphit analog dem Ausführungsbeispiel 1 hergestellt. Der Unterschied lag lediglich darin, dass kein Katalysator (SiC) bei der Koksherstellung zugegeben wurde.

Die Röntgenanalyse des Graphitpulvers ergab einen d₀₀₂ Wert von 0,3365 nm und einen Lc-Wert von 100 nm. Der Graphitierungsgrad beträgt damit 0,87. Im Lithiumionen-Zellentest analog dem Beispiel 1 betrug die mittlere Entladekapazität 337 mAh/g.

### Vergleichsbeispiel B (Stand der Technik)

In diesem Vergleichsbeispiel wurde analog dem Vergleichsbeispiel A kein Katalysator bei der Koksherstellung zugegeben. Jedoch wurde in der Grünrezeptur ausschließlich in das Binderpech SiC-Pulver dazugegeben. Dabei wurden 3 Mischungen getestet mit folgenden Verhältnissen, die in Tabelle1 zusammengefasst sind.

**Tabelle 1**

| Mischungen | Entladekapazität in mAh/g |
|---|---|
| 5 Gew.% SiC / 75 Gew.% Koks / 20 Gew.% Pech | 345 |
| 10 Gew.% SiC / 70 Gew.% Koks / 20 Gew.& Pech | 350 |
| 15 Gew.% SiC / 64 Gew.% Koks / 21 Gew.% Pech | 360 |

Alle diese Rezepturen wurden analog dem Beispiel 1 prozessiert und analysiert. In dem Zelltest wurden die Entladekapazitäten bestimmt, die in Tabelle 1 mit eingetragen wurden.

Wie ein Vergleich der Ergebnisse aus Ausführungsbeispiel 1 und dem Vergleichsbeispiel B zeigt, erhält man gute Entladekapazitäten im Vergleichsbeispiel Berst bei sehr hohen Katalysatorgehalten.

Durch die Zugabe des Graphitierungskatalysator sowohl im Koks als auch im Binderpech (siehe Ausführungsbeispiel 2) wird eine homogene Verteilung des Katalysators über das gesamte Material erreicht, wodurch eine weitere Erhöhung der Entladekapazität erreicht wird.

Die Graphitherstellung mit dem dotierten Koks zeigt damit sowohl hinsichtlich Performance wie auch im Hinblick auf die Kosten überraschende Vorteile, die durch den effizienteren Materialeinsatz des Graphitierungskatalysators und der höheren Prozessgeschwindigkeit bei der Karbonisierung und Graphitierung resultieren.

## Patentansprüche

1. Verfahren zur Herstellung von Graphitmaterialien, **dadurch gekennzeichnet, dass** die folgenden Schritte umfasst sind:
a) Zugeben mindestens eines für eine katalytische Graphitierung wirksamen Katalysators, ausgewählt aus mindestens einer Verbindung der Oxide und Carbide aus der Gruppe mit den Elementen Eisen, Nickel, Titan, Silizium und Bor zu Petrolrückständen, Steinkohlenteerpech und/oder Rückständen der Kohlevergasung, Fischer-Tropsch-Synthese oder Kohlehydrierung in einem Delayed Coker;
b) Herstellen eines dotierten, grünen Kokses im Delayed Coker, wobei unter dem Begriff dotiert verstanden wird, dass der Koks homogen verteilten Katalysator enthält,
c) Kalzinieren des aus Schritt b) erhaltenen dotierten, grünen Kokses bei 1100-1400°C zu einem dotierten, kalzinierten Koks
d) Mechanisches Zerkleinern des dotierten, kalzinierten Kokses;
e) Formen eines Grünkörpers aus dem dotierten, kalzinierten Koks aus Schritt d) zusammen mit einem Binderzusatz und anschließender Karbonisierung des Grünkörpers;
f) Graphitieren des karboniserten Grünkörpers aus Schritt e) bei Temperaturen von größer 2600°C, bevorzugt größer 2800°C und besonders bevorzugt größer 3000°C in der Acheson oder Castner Graphitierung oder durch eine kontinuierliche oder Batch-Pulvergraphitierung des Pulvers aus Schritt d);
g) Mahlen des Körpers aus Schritt f).

2. Verfahren zur Herstellung von Graphitmaterialien nach Anspruch 1, **dadurch gekennzeichnet, dass** als Katalysator in Schritt a) mindestens eine Verbindung ausgewählt aus der Gruppe SiC, SiO₂, Fe₂O₃ oder TiO₂ ist.

3. Verfahren zur Herstellung von Graphitmaterialien nach Anspruch 1 oder 2, **dadurch gekennzeichnet, dass** der kalzinierte, dotierte Koks aus Schritt b) maximal 15 Gew.%, Katalysator umfasst.

4. Verfahren zur Herstellung von Graphitmaterialien nach Anspruch 1, **dadurch gekennzeichnet, dass** der kalzinierte, dotierte Koks bei der Herstellung des Grünkörpers in Schritt e) eine maximale Korngröße von größer 100 µm.

5. Verfahren zur Herstellung von Graphitmaterialien nach Anspruch 1, **dadurch gekennzeichnet, dass** die Graphitierung im Schritt f) im Falle einer Formkörpergraphitierung das Castnerverfahren ist und im Falle der Pulvergraphitierung die kontinuierliche Pulvergraphitierung ist.

6. Verfahren zur Herstellung von Graphitmaterialien nach Anspruch 1, **dadurch gekennzeichnet, dass** das Pulver aus dem Schritt d) vor der Formgebung zusätzlich mit Naturgraphit kleiner 50 Gew.-% gemischt wird.

7. Verfahren zur Herstellung von Graphitmaterialien nach Anspruch 1, **dadurch gekennzeichnet, dass** in Schritt e) der Binder für die Formkörperherstellung ausgewählt wird aus der Gruppe umfassend aus Steinkohlenteerpech, Bitumen, Phenolharz, Furanharz oder beliebigen Mischungen hiervon.

8. Verfahren zur Herstellung von Graphitmaterialien nach Anspruch 1 oder 7, **dadurch gekennzeichnet, dass** dem verwendeten Binder in Schritt d) zusätzlich ein Katalysator beigemischt wird.

9. Verfahren zur Herstellung von Graphitmaterialien nach Anspruch 8, **dadurch gekennzeichnet, dass** der zusätzliche Katalysator ausgewählt wird aus mindestens einer Verbindung der Oxide und Carbide aus der Gruppe mit den Elementen Eisen, Nickel, Titan, Silizium und Bor und maximal 15 Gew.% bezogen auf den Binderanteil beträgt.

10. Verfahren zur Herstellung von Graphitmaterialien nach einem der vorangehenden Ansprüche, **dadurch gekennzeichnet, dass** das Graphitmaterial nach der Graphitierung eine spezifische Entladekapazität von 345 bis 365 mAh/g aufweist.

## Claims

1. Method for producing graphite materials, **characterized in that** the following steps are included:
a) adding at least one catalyst which is effective for catalytic graphitization and is selected from at least one compound of oxides and carbides from the group comprising the elements iron, nickel, titanium, silicon and boron to form petroleum residues, coal tar pitch and/or residues from coal gasification, Fischer-Tropsch synthesis or coal hydrogenation in a delayed coker;
b) producing a doped, green coke in the delayed coker, with the term doped being understood to mean that the coke contains homogeneously distributed catalyst;
c) calcining the doped, green coke obtained from step b) at 1100-1400°C to form a doped, calcined coke;
d) mechanically comminuting the doped, calcined coke;
e) shaping a green body from the doped, calcined coke from step d) together with a binder additive and subsequently carbonizing the green body;
f) graphitizing the carbonized green body from step e) at temperatures of greater than 2600°C, preferably greater than 2800°C, and particularly preferably greater than 3000°C, using the Acheson or Castner graphitization process or by means of continuous or batch powder graphitization of the powder from step d);
g) grinding the body from step f).

2. Method for producing graphite materials according to claim 1, **characterized in that** at least one compound selected from the group consisting of SiC, SiO₂, Fe₂O₃ or TiO₂ is the catalyst in step a).

3. Method for producing graphite materials according to either claim 1 or claim 2, **characterized in that** the calcined, doped coke from step b) comprises at most 15 wt.% catalyst.

4. Method for producing graphite materials according to claim 1, **characterized in that,** when the green body is produced in step e), the calcined, doped coke a maximum particle size of greater than 100 µm.

5. Method for producing graphite materials according to claim 1, **characterized in that,** in the case of shaped body graphitization, the graphitization in step f) is the Castner method and, in the case of powder graphitization, said graphitization is continuous powder graphitization.

6. Method for producing graphite materials according to claim 1, **characterized in that** the powder from step d) is mixed with natural graphite of less than 50 wt.% before shaping.

7. Method for producing graphite materials according to claim 1, **characterized in that,** in step e), the binder for producing the shaped body is selected from the group comprising coal tar pitch, bitumen, phenolic resin, furan resin or any mixtures thereof.

8. Method for producing graphite materials according to either claim 1 or claim 7, **characterized in that** a catalyst is additionally admixed with the binder used in step d).

9. Method for producing graphite materials according to claim 8, **characterized in that** the additional catalyst is selected from at least one compound of the oxides and carbides from the group comprising the elements iron, nickel, titanium, silicon and boron and is at most 15 wt.%, based on the binder content.

10. Method for producing graphite materials according to any of the preceding claims, **characterized in that,** after graphitization, the graphite material has a specific discharge capacity from 345 to 365 mAh/g.

## Revendications

1. Procédé de fabrication de matériaux en graphite, **caractérisé en ce qu'**il comprend les étapes suivantes :
a) ajout d'au moins un catalyseur actif pour une graphitisation catalytique, choisi parmi au moins un composé des oxydes et des carbures du groupe comportant les éléments fer, nickel, titane, silicium et bore, à des résidus de pétrole, du brai de goudron de houille et/ou des résidus de la gazéification du charbon, d'une synthèse Fischer-Tropsch ou de l'hydrogénation du charbon, dans une unité de cokéfaction retardée ;
b) fabrication d'un coke vert dopé dans l'unité de cokéfaction retardée, dans lequel le terme dopé signifie que le coke contient un catalyseur distribué de manière homogène,
c) calcination du coke vert dopé obtenu à l'étape b) à 1 100 à 1 400 °C en un coke calciné dopé
d) concassage mécanique du coke calciné dopé ;
e) formation d'un corps vert à partir du coke calciné dopé de l'étape d) conjointement avec un additif liant et carbonisation subséquente du corps vert ;
f) graphitisation du corps vert carbonisé de l'étape e) à des températures supérieures à 2 600 °C, de préférence supérieures à 2 800 °C et de manière particulièrement préférée supérieures à 3 000 °C lors de la graphitisation de type Acheson ou Castner, ou par une graphitisation de poudre continue ou par lots de la poudre de l'étape d) ;
g) broyage du corps de l'étape f).

2. Procédé de fabrication de matériaux en graphite selon la revendication 1, **caractérisé en ce que,** comme catalyseur à l'étape a), au moins un composé est choisi dans le groupe constitué par SiC, SiO₂, Fe₂O₃ ou TiO₂.

3. Procédé de fabrication de matériaux en graphite selon la revendication 1 ou 2, **caractérisé en ce que** le coke dopé calciné de l'étape b) comprend au maximum 15 % en poids de catalyseur.

4. Procédé de fabrication de matériaux en graphite selon la revendication 1, **caractérisé en ce que** le coke dopé calciné, lors de la fabrication du corps vert à l'étape e), une grosseur de grains maximale supérieure à 100 µm.

5. Procédé de fabrication de matériaux en graphite selon la revendication 1, **caractérisé en ce que** la graphitisation à l'étape f) est le procédé Castner dans le cas d'une graphitisation de corps moulé et est la graphitisation de poudre continue dans le cas de la graphitisation de poudre.

6. Procédé de fabrication de matériaux en graphite selon la revendication 1, **caractérisé en ce que** la poudre de l'étape d), avant le formage, est en outre mélangée à du graphite naturel inférieur à 50 % en poids.

7. Procédé de fabrication de matériaux en graphite selon la revendication 1, **caractérisé en ce que,** à l'étape e), le liant pour la fabrication de corps moulé est choisi dans le groupe comprenant le brai de goudron de houille, le bitume, la résine phénolique, la résine furanique ou des mélanges quelconques de ceux-ci.

8. Procédé de fabrication de matériaux en graphite selon la revendication 1 ou 7, **caractérisé en ce qu'**un catalyseur est en outre incorporé au liant utilisé à l'étape d).

9. Procédé de fabrication de matériaux en graphite selon la revendication 8, **caractérisé en ce que** le catalyseur supplémentaire est choisi parmi au moins un composé des oxydes et des carbures du groupe comportant les éléments fer, nickel, titane, silicium et bore, et est d'au maximum 15 % en poids par rapport à la proportion de liant.

10. Procédé de fabrication de matériaux en graphite selon l'une des revendications précédentes, **caractérisé en ce que** le matériau en graphite présente, après la graphitisation, une capacité de décharge spécifique de 345 à 365 mAh/g.
